# EUROPEAN PATENT APPLICATION

(11) **EP 4 715 988 A1**
(43) Date of publication of application: **25.03.2026**
(21) Application number: 24928712.9
(22) Date of filing: 23.12.2024
(51) Int. Cl.: H01M 50/289, H01M 10/658, H01M 50/249

(54) **BATTERY PACK**

(30) Priority: 06.03.2024 KR 20240031933
(71) Applicant: LG Energy Solution, Ltd., Seoul 07335 (KR)
(72) Inventor: HAN, Min-Hee, Daejeon 34122 (KR); KIM, Soo-Youl, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2024/020963
(87) International publication number: WO 2025/187914

(57) **Abstract**

Disclosed is a battery pack. A battery pack according to one embodiment of the present disclosure may include a base plate; a battery assembly including a case installed on an upper surface of the base plate and a plurality of battery cells positioned inside the case; a partition wall installed on the upper surface of the base plate; and a heat-resistant member provided on one surface of the partition wall.

## Description

### TECHNICAL FIELD

The present disclosure relates to a battery pack.

This application is based on and claims priority from Korean Patent Application No. 10-2024-0031933, filed on March 6, 2024, with the Korean Intellectual Property Office, the disclosure of which is incorporated herein in its entirety by reference.

### BACKGROUND ART

As the demand for portable electronic products such as laptops, video cameras, and mobile phones has rapidly increased and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydrogen batteries, nickel zinc batteries, lithium secondary batteries, and the like, and among them, lithium secondary batteries are in the spotlight as they have advantages of free charge/discharge due to almost no memory effect compared to nickel-based secondary batteries, very low self-discharge rate, and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, secondary batteries have been widely used for driving or energy storage not only in small devices such as portable electronic devices, but also in medium and large devices such as electric vehicles and energy storage systems (ESSs). These secondary batteries are accommodated together inside a module case in a state where a plurality of them are electrically connected, which may form one battery module. And, such a battery module may be connected in plurality to form one battery pack.

However, when a plurality of secondary batteries (battery cells) or a plurality of battery modules are concentrated in a narrow space as described above, they may be vulnerable to thermal events. In particular, when an event such as thermal runaway occurs in any one of the battery cells, high temperature gas, flame, heat, or the like may be generated. If such gas, flame, heat, or the like is transferred to other battery cells included in the same battery module, an explosive chain reaction situation such as thermal propagation may occur. And, this chain reaction may cause not only an accident such as fire or explosion in the corresponding battery module, but also fire or explosion in other battery modules.

Moreover, in the case of medium and large-sized battery packs used in electric vehicles, a large number of battery cells and battery modules may be included to increase output and/or capacity, thereby further increasing the risk of thermal chain reaction. In addition, in the case of a battery pack mounted on an electric vehicle, there may be a user such as a driver in the vicinity thereof. Therefore, if a thermal event occurring in a specific battery module is not properly controlled and a chain reaction occurs, it may cause not only significant property damage but also loss of life. Therefore, it is necessary to improve the thermal safety of the battery pack by appropriately controlling thermal events occurring in battery cells or modules.

### DISCLOSURE

### Technical Problem

The present disclosure is designed to solve the above-described problems and other problems.

Another object of the present disclosure may be to provide a battery pack having improved safety when a thermal event occurs.

Another object of the present disclosure may be to provide a battery pack capable of suppressing thermal propagation through a partition wall having a heat-resistant member when a thermal event occurs.

Another object of the present disclosure may be to provide a battery pack having a structure capable of improving rigidity while suppressing thermal propagation.

### Technical Solution

A battery pack according to one embodiment of the present disclosure may include a base plate; a battery assembly including a case installed on an upper surface of the base plate and a plurality of battery cells positioned inside the case; a partition wall installed on the upper surface of the base plate; and a heat-resistant member provided on one surface of the partition wall.

Additionally, the partition wall may provide an internal space, and the heat-resistant member may be disposed in the internal space.

Additionally, the partition wall may include a first plate; and a second plate spaced apart from the first plate and facing the first plate, and the heat-resistant member may be positioned between the first plate and the second plate.

Additionally, the partition wall may further include a first part connecting a lower portion of the first plate and a lower portion of the second plate.

Additionally, the first part may extend long along a lower edge of the first plate and may cover a lower edge of the heat-resistant member.

Additionally, the heat-resistant member may be in contact with the upper surface of the base plate.

Additionally, the partition wall may further include a second part connecting an upper portion of the first plate and an upper portion of the second plate.

Additionally, the second part may extend long along an upper edge of the first plate and may cover an upper edge of the heat-resistant member.

Additionally, the heat-resistant member may include a first heat-resistant member and a second heat-resistant member that are spaced apart from each other, and the partition wall may further include a third part positioned between the first heat-resistant member and the second heat-resistant member and connecting the first plate and the second plate.

Additionally, the heat-resistant member may be configured to have a thermal conductivity lower than the thermal conductivity of the partition wall.

Additionally, the heat-resistant member may include a silicon or aerogel material.

Additionally, the heat-resistant member may cover an outer surface of the partition wall.

Additionally, the heat-resistant member may cover the entire outer surface of the partition wall.

Additionally, the battery pack may further include an adhesive member disposed between the heat-resistant member and the partition wall.

Additionally, the heat-resistant member may include a mica material.

A vehicle according to one aspect of the present disclosure includes a battery pack of the present disclosure.

### Advantageous Effects

According to at least one of the embodiments of the present disclosure, the thermal safety of the battery pack may be improved.

According to at least one of the embodiments of the present disclosure, thermal propagation may be suppressed.

According to at least one of the embodiments of the present disclosure, the rigidity of the battery pack may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view showing a battery pack according to one embodiment of the present disclosure.
FIG. 2 is an exploded view showing a partial configuration of the battery pack of FIG. 1.
FIG. 3 is an exploded view showing a partial configuration of the battery assembly of FIG. 2.
FIG. 4 is a view showing a partial configuration of the battery pack of FIG. 1.
FIGS. 5 to 7 are views showing a partition wall of a battery pack according to one embodiment of the present disclosure.
FIGS. 8 to 11 are views showing a partition wall of a battery pack according to another embodiment of the present disclosure.
FIGS. 12 to 15 are views showing a partition wall of a battery pack according to still another embodiment of the present disclosure.
FIGS. 16 to 18 are views showing a partition wall of a battery pack according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

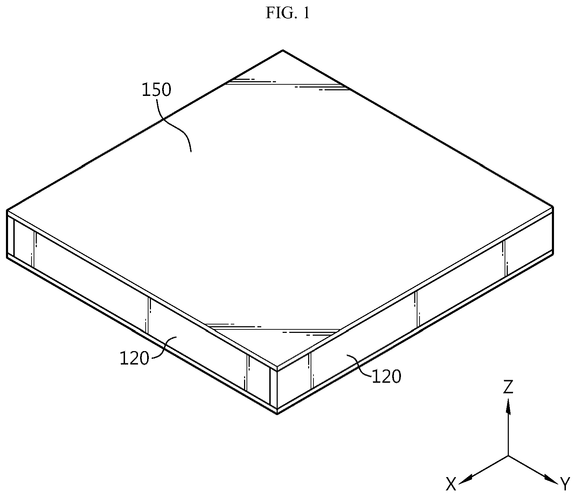

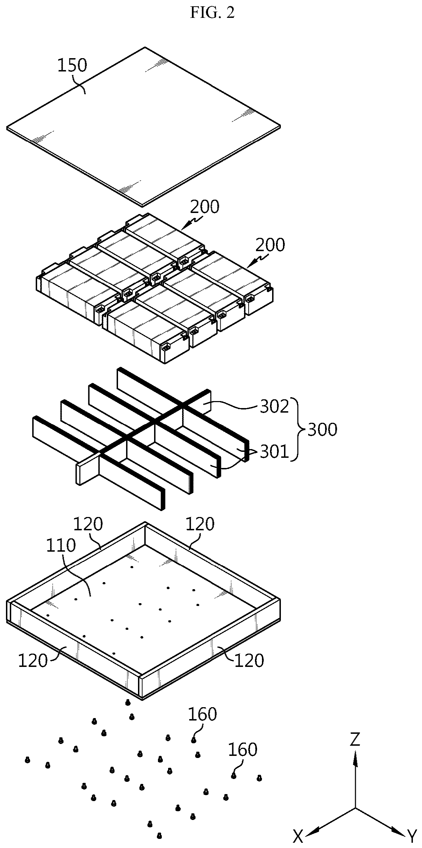

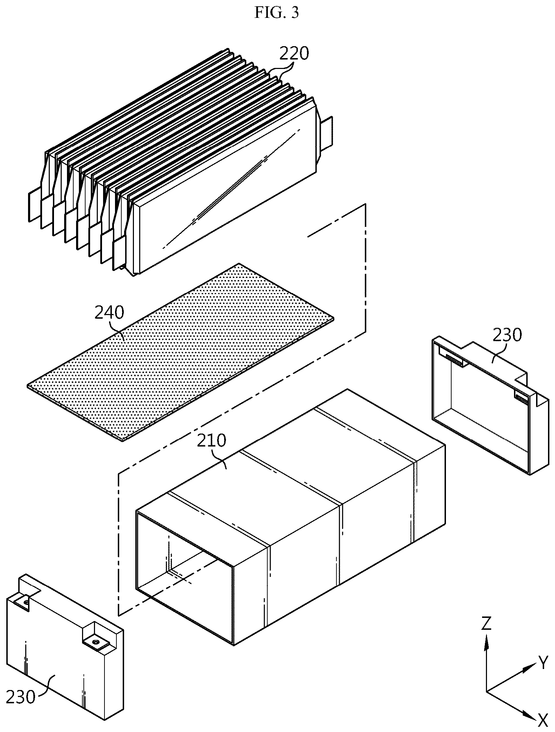

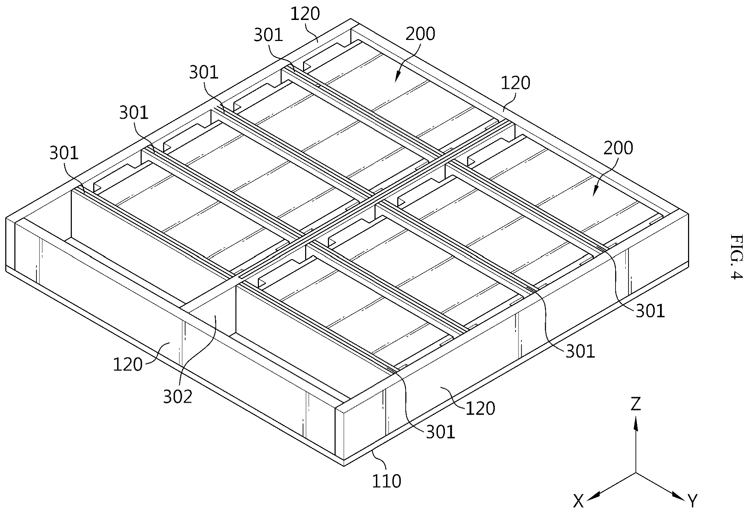

FIG. 1 is a view showing a battery pack according to one embodiment of the present disclosure. FIG. 2 is an exploded view showing a partial configuration of the battery pack of FIG. 1. FIG. 3 is an exploded view showing a partial configuration of the battery assembly 200 of FIG. 2. FIG. 4 is a view showing a partial configuration of the battery pack of FIG. 1.

Referring to FIGS. 1 to 4, the base plate 110 may have a rectangular shape. The base plate 110 may have a flat plate shape. The base plate 110 may form the exterior of the battery pack. The base plate 110 may provide an internal space of the battery pack.

The battery assembly 200 may be provided in plurality. The battery assembly 200 may be installed, fastened, coupled, fixed, or attached to an upper surface of the base plate 110.

The battery assembly 200 may be provided in plurality. Each battery assembly 200 may include a module case 210, a battery cell 220, an end cover 230, and a heat conducting member 240. The module case 210 may have a cuboidal shape. The module case 210 may have a shape in which the left side surface and the right side surface are open. The module case 210 may form the exterior of the battery assembly 200. The module case 210 may provide a space therein.

The battery cell 220 may be accommodated inside the module case 210. The battery cell 220 may be provided in plurality. At this time, the battery cell 220 may refer to a secondary battery. Additionally, the battery cell 220 may have a pouch shape. The plurality of battery cells 220 may be stacked or arranged in the front-back direction.

The heat conducting member 240 may be positioned between the plurality of battery cells 220 and the module case 210. The heat conducting member 240 may be positioned below the plurality of battery cells 220. The heat conducting member 240 may be made of resin. Additionally, the heat conducting member 240 may fix the plurality of battery cells 220 to the module case 210. Additionally, the heat conducting member 240 may transfer heat generated from the plurality of battery cells 220 to the module case 210.

The end cover 230 may be provided in a pair. The pair of end covers 230 may be coupled, fastened, fixed, or attached to the left side surface and the right side surface of the module case 210, respectively. The end covers 230 may form the exterior of the battery assembly 200.

The partition wall 300 may include a first partition wall 301 and a second partition wall 302. The partition wall 300 may be provided in plurality. The partition wall 300 may be installed, fastened, fixed, coupled, or attached to the upper surface of the base plate 110. The partition wall 300 may divide the internal space of the battery pack. Each of the battery assemblies 200 may be positioned in the space divided by the partition wall 300. Additionally, the partition wall 300 may face at least one surface of the battery assembly 200.

The heat-resistant member 310 may be provided on at least one surface of the partition wall 300. The heat-resistant member 310 may be coupled, attached, fastened, coated, or fixed to the partition wall 300. The heat-resistant member 310 may include a heat-resistant material. Additionally, the heat-resistant member 310 may include a fire-resistant material. For example, the heat-resistant member 310 may include at least one of a silicone material, an aerogel material, and a mica material. Additionally, the heat-resistant member 310 may include a thermal expansion material. As a result, the heat-resistant member 310 may expand when a thermal event occurs. The heat-resistant member 310 may be configured as a portion of the partition wall 300. Additionally, the heat-resistant member 310 may be configured to have a thermal conductivity lower than the thermal conductivity of the partition wall 300.

The heat-resistant member 310 may be used as a collective term for the heat-resistant members 310a, 310b, 310c, 310d, 311b, 312b according to various embodiments to be described below.

With this configuration of the present disclosure, the thermal safety of the battery pack may be improved. By having the heat-resistant member 310, the partition wall 300 may suppress or block thermal propagation between the battery assemblies 200 when a thermal event occurs.

Additionally, with this configuration of the present disclosure, the partition wall 300 may improve the structural rigidity of the base plate 110 or the battery pack.

Referring to FIGS. 1 to 4, the battery pack according to one embodiment of the present disclosure may include a side wall 120 and a pack cover 150.

The side wall 120 may be installed, fastened, coupled, fixed, or attached to the upper surface of the base plate 110. The side wall 120 may be composed of four walls. The side wall 120 may be disposed along the perimeter of the base plate 110. The side wall 120 may form the exterior of the battery pack. The side wall 120 may provide an internal space.

The battery assembly 200, 201, 202, 203, 204 may be surrounded by the side wall 120.

The pack cover 150 may have a rectangular plate shape. The pack cover 150 may have a flat plate shape. The pack cover 150 may form the exterior of the battery pack. The pack cover 150 may cover the internal space of the battery pack. The pack cover 150 may be installed, fastened, coupled, fixed, or attached to the side wall 120. Additionally, the pack cover 150 may cover the upper surface of the battery assembly 200, 201, 202, 203, 204.

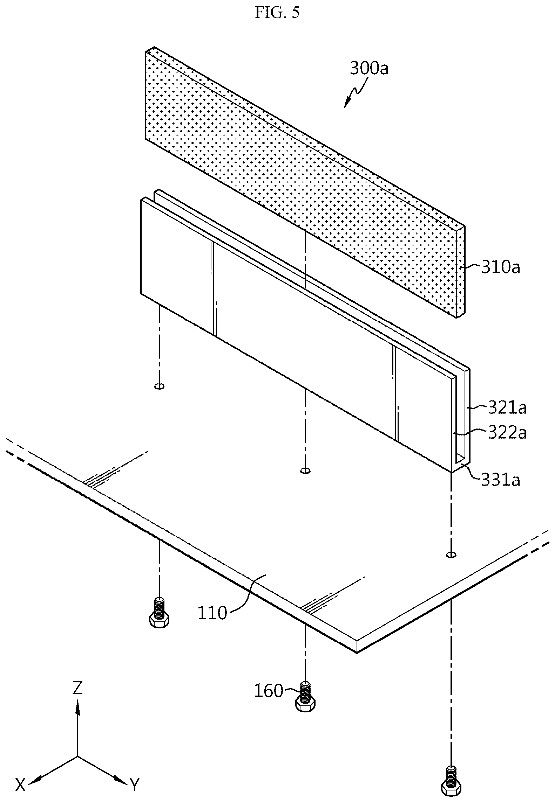

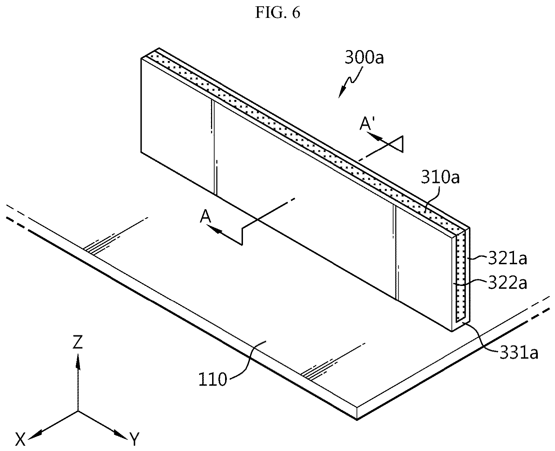

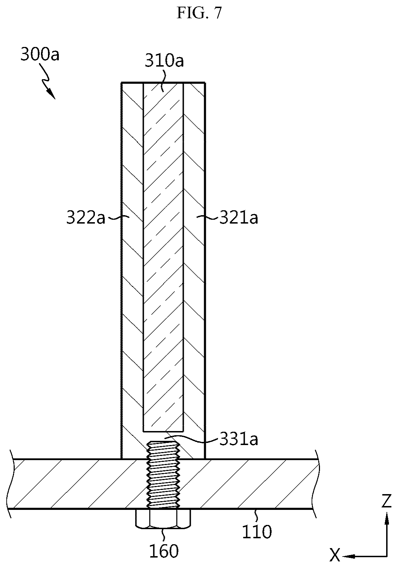

FIGS. 5 to 7 are views showing a partition wall 300a of a battery pack according to one embodiment of the present disclosure. FIG. 5 is an exploded view showing that a partition wall 300a and a base plate 110 of a battery pack according to one embodiment of the present disclosure are separated, FIG. 6 is a view showing that the partition wall 300a and the base plate 110 of FIG. 5 are coupled, and FIG. 7 is a view showing a cross-sectional configuration taken along the cutting line A-A' of FIG. 6.

Referring to FIGS. 5 to 7, the partition wall 300a according to one embodiment of the present disclosure may provide an internal space. And, the heat-resistant member 310a may be disposed in the internal space. At this time, the heat-resistant member 310a may be configured in the shape of a pad or a plate.

With this configuration of the present disclosure, the thermal safety of the battery pack may be improved. By having the heat-resistant member 310a inside the partition wall 300a, the partition wall 300a may suppress or block thermal propagation between the battery assemblies 200 when a thermal event occurs.

Referring to FIGS. 5 to 7, the partition wall 300a according to one embodiment of the present disclosure may include a first plate 321a and a second plate 322a. The first plate 321a and the second plate 322a may each have a rectangular plate shape. Additionally, the first plate 321a and the second plate 322a may form the exterior of the partition wall 300a. The first plate 321a and the second plate 322a may face each other. Additionally, the first plate 321a and the second plate 322a may be spaced apart in the thickness direction of the partition wall 300a. And, the heat-resistant member 310a may be positioned between the first plate 321a and the second plate 322a. Additionally, the heat-resistant member 310a may be coupled, fastened, attached, fixed, or coated to the first plate 321a or the second plate 322a.

With this configuration of the present disclosure, the thermal safety of the battery pack may be improved. The first plate 321a and the second plate 322a may protect the heat-resistant member 310a from external heat or flames.

Referring to FIGS. 5 to 7, the partition wall 300a according to one embodiment of the present disclosure may include a first part 331a and a fastening member 160. The first part 331a may connect a lower portion of the first plate 321a and a lower portion of the second plate 322a. Additionally, the fastening member 160 may penetrate the base plate 110 and at least a portion thereof may be inserted into the first part 331a.

With this configuration of the present disclosure, the thermal safety of the battery pack may be improved. Additionally, the base plate 110 and the partition wall 300a are fastened, so that the rigidity of the battery pack may be improved.

Referring to FIGS. 5 to 7, the first part 331a of the partition wall 300a according to one embodiment of the present disclosure may extend long along a lower edge of the first plate 321a or a lower edge of the second plate 322a. And, the first part 331a may cover a lower edge of the heat-resistant member 310a or a lower surface of the heat-resistant member 310a. At this time, an upper edge of the heat-resistant member 310a or an upper surface of the heat-resistant member 310a may have an exposed structure.

With this configuration of the present disclosure, the thermal safety of the battery pack may be improved. Additionally, the partition wall 300a may protect the heat-resistant member 310a from external heat or flames.

Hereinafter, differences from the above-described embodiment will be mainly described, and duplicate descriptions will be omitted.

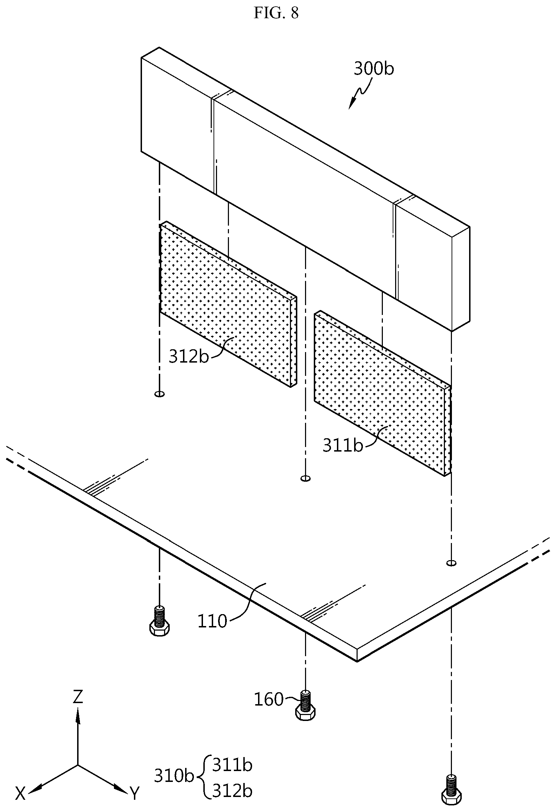

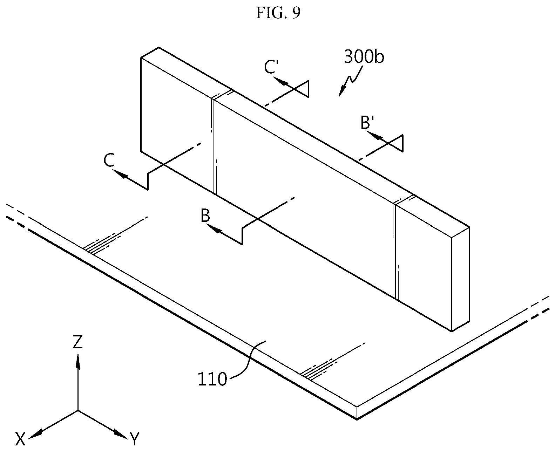

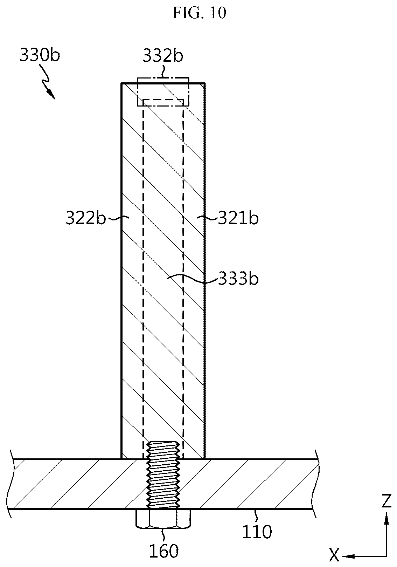

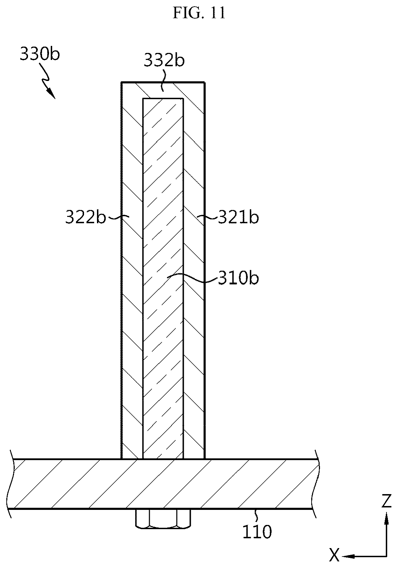

FIGS. 8 to 11 are views showing a partition wall 300b of a battery pack according to another embodiment of the present disclosure. FIG. 8 is an exploded view showing that a partition wall 300b and a base plate 110 of a battery pack according to another embodiment of the present disclosure are separated, FIG. 9 is a view showing that the partition wall 300b and the base plate 110 of FIG. 8 are coupled, FIG. 10 is a view showing a cross-sectional configuration taken along the cutting line B-B' of FIG. 9, and FIG. 11 is a view showing a cross-sectional configuration taken along the cutting line C-C' of FIG. 9.

Referring to FIGS. 8 to 11, the heat-resistant member 310b of the partition wall 300b of the battery pack according to another embodiment of the present disclosure may be in contact with the upper surface of the base plate 110.

With this configuration of the present disclosure, the thermal safety of the battery pack may be improved. The heat-resistant member 310b extends until it contacts the upper surface of the base plate 110, so that the area or volume of the heat-resistant member 310b may be increased. As a result, the performance of suppressing thermal propagation of the partition wall 300b may be improved.

Referring to FIGS. 8 to 11, the partition wall 300b of the battery pack according to another embodiment of the present disclosure may include a second part 332b. The second part 332b may connect an upper portion of the first plate 321b and an upper portion of the second plate 322b.

With this configuration of the present disclosure, the thermal safety of the battery pack may be improved. Additionally, the partition wall 300b may protect the heat-resistant member 310b from external heat or flames.

Referring to FIGS. 8 to 11, the second part 332b of the partition wall 300b of the battery pack according to another embodiment of the present disclosure may extend long along an upper edge of the first plate 321b or an upper edge of the second plate 322b. And, the second part 332b may cover an upper edge of the heat-resistant member 310b or an upper surface of the heat-resistant member 310b.

With this configuration of the present disclosure, the thermal safety of the battery pack may be improved. Additionally, the partition wall 300b may protect the heat-resistant member 310b from external heat or flames.

Referring to FIGS. 8 to 11, the heat-resistant member 310b of the battery pack according to another embodiment of the present disclosure may be composed of a first heat-resistant member 311b and a second heat-resistant member 312b. The first heat-resistant member 311b and the second heat-resistant member 312b may be spaced apart along the length direction of the partition wall 300b. Additionally, the first heat-resistant member 311b and the second heat-resistant member 312b may be positioned between the first plate 321b and the second plate 322b, respectively.

Additionally, the partition wall 300b may include a third part 333b. The third part 333b may be positioned between the first heat-resistant member 311b and the second heat-resistant member 312b. And, the third part 333b may connect the first plate 321b and the second plate 322b. Additionally, the third part 333b may extend in the height direction of the partition wall 300b. And, the third part 333b may be contacted, fixed, coupled, or attached to the upper surface of the base plate 110.

With this configuration of the present disclosure, the thermal safety of the battery pack may be improved. Additionally, the coupling force between the base plate 110 and the partition wall 300b may be strengthened, and the rigidity of the battery pack may be improved.

Referring to FIGS. 8 to 11, the third part 333b of the partition wall 300b of the battery pack according to another embodiment of the present disclosure may be fastened to the base plate 110. Additionally, the fastening member 160 may penetrate the base plate 110 and at least a portion thereof may be inserted into the third part 333b.

With this configuration of the present disclosure, the thermal safety of the battery pack may be improved. Additionally, the base plate 110 and the partition wall 300b are fastened, so that the rigidity of the battery pack may be improved.

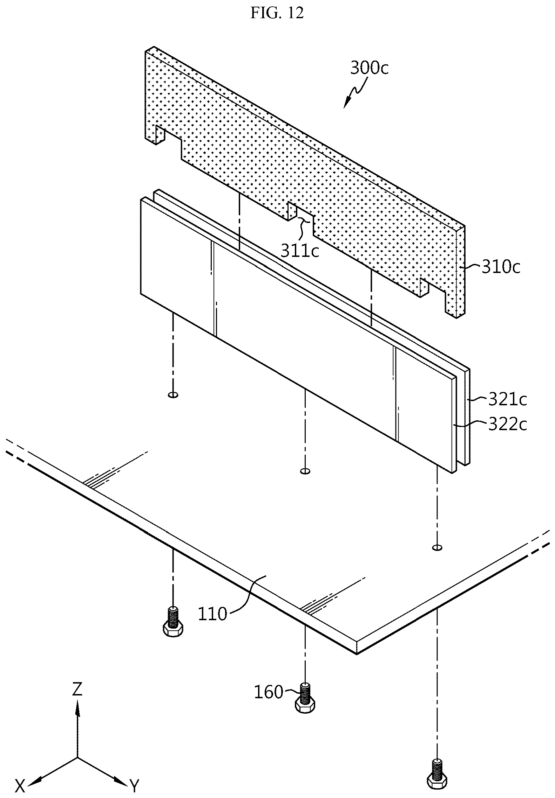

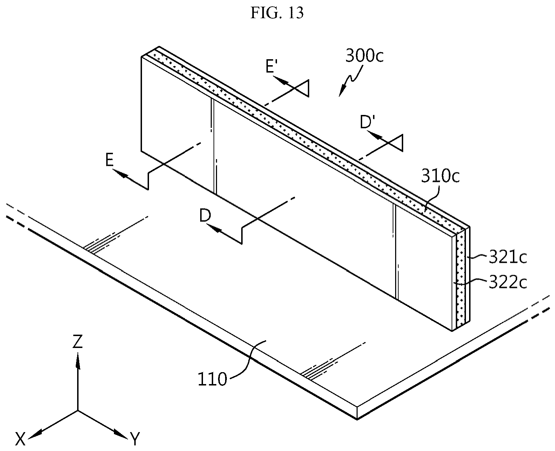

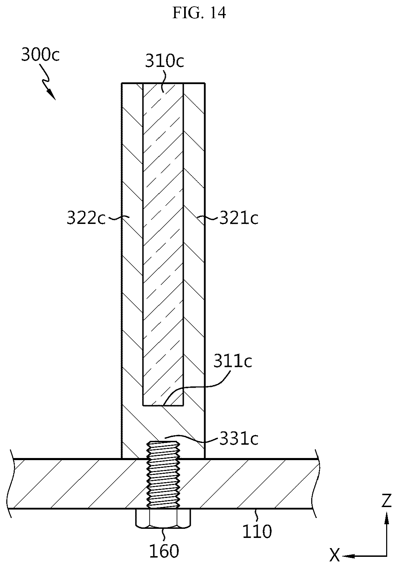

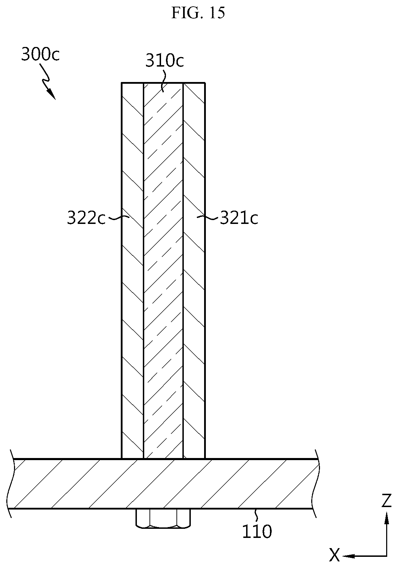

FIGS. 12 to 15 are views showing a partition wall 300c of a battery pack according to still another embodiment of the present disclosure. FIG. 12 is an exploded view showing that a partition wall 300c and a base plate 110 of a battery pack according to still another embodiment of the present disclosure are separated, FIG. 13 is a view showing that the partition wall 300c and the base plate 110 of FIG. 12 are coupled, FIG. 14 is a view showing a cross-sectional configuration taken along the cutting line D-D' of FIG. 13, and FIG. 15 is a view showing a cross-sectional configuration taken along the cutting line E-E' of FIG. 13.

Referring to FIGS. 12 to 15, the heat-resistant member 310c may be positioned between the first plate 321c and the second plate 322c. A first part 331c may connect a lower portion of the first plate 321c and a lower portion of the second plate 322c. The first part 331c may be provided in plurality. The plurality of first parts 331c may be arranged along the length direction of the partition wall 300c. The heat-resistant member 310c may have a receiving groove 311c in which the first part 331c is accommodated. The heat-resistant member 310c may be in contact with the upper surface of the base plate 110. At this time, an upper edge of the heat-resistant member 310c or an upper surface of the heat-resistant member 310c may have an exposed structure. And, the first part 331c may be contacted, fixed, coupled, or attached to the upper surface of the base plate 110. Additionally, the fastening member 160 may penetrate the base plate 110 and at least a portion thereof may be inserted into the first part 331c.

With this configuration of the present disclosure, the thermal safety of the battery pack may be improved. Additionally, the base plate 110 and the partition wall 300c are fastened, so that the rigidity of the battery pack may be improved.

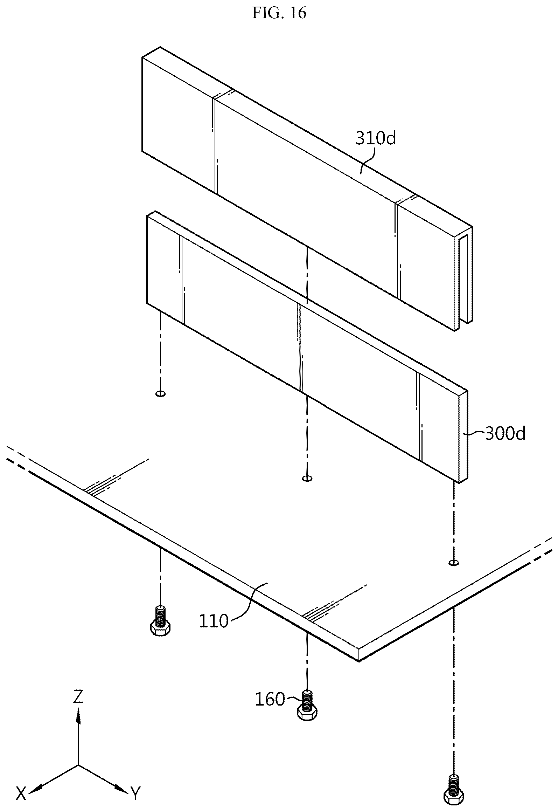

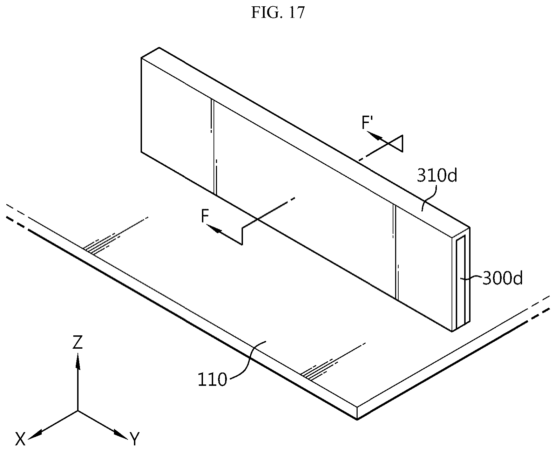

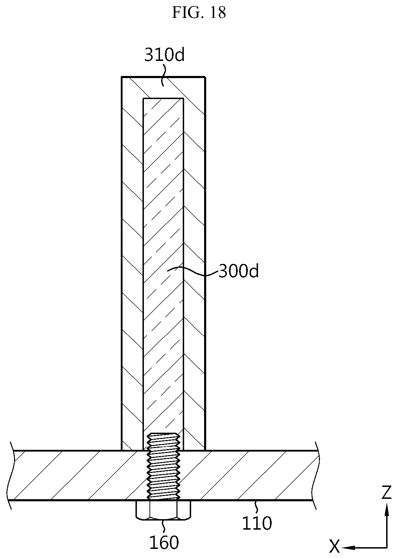

FIGS. 16 to 18 are views showing a partition wall 300d of a battery pack according to still another embodiment of the present disclosure. FIG. 16 is an exploded view showing that a partition wall 300d and a base plate 110 of a battery pack according to still another embodiment of the present disclosure are separated, FIG. 17 is a view showing that the partition wall 300d and the base plate 110 of FIG. 16 are coupled, and FIG. 18 is a view showing a cross-sectional configuration taken along the cutting line F-F' of FIG. 17.

Referring to FIGS. 16 to 18, the heat-resistant member 310d of the battery pack according to still another embodiment of the present disclosure may cover an outer surface of the partition wall 300d. At this time, the heat-resistant member 310d may be disposed to face at least one surface of the battery assembly 200. At this time, the partition wall 300d may be integrally formed.

With this configuration of the present disclosure, the thermal safety of the battery pack may be improved. Additionally, the heat-resistant member 310d may protect the partition wall 300d from flames or heat.

Referring to FIGS. 16 to 18, the heat-resistant member 310d of the battery pack according to still another embodiment of the present disclosure may cover the entire outer surface of the partition wall 300d. At this time, the heat-resistant member 310d may be referred to as a cover 310d. The heat-resistant member 310d may be positioned between the partition wall 300d and the battery assembly 200. Additionally, the heat-resistant member 310d may cover the upper surface of the partition wall 300d. And, the partition wall 300d may be contacted, fixed, coupled, or attached to the upper surface of the base plate 110. Additionally, the fastening member 160 may penetrate the base plate 110 and at least a portion thereof may be inserted into the partition wall 300d.

With this configuration of the present disclosure, the thermal safety of the battery pack may be improved. Additionally, the heat-resistant member 310d may entirely protect the partition wall 300d from flames or heat. Additionally, the base plate 110 and the partition wall 300d are fastened, so that the rigidity of the battery pack may be improved.

Referring to FIGS. 16 to 18, the heat-resistant member 310d of the battery pack according to still another embodiment of the present disclosure may be attached to the partition wall 300d. Additionally, an adhesive member may be disposed between the heat-resistant member 310d and the partition wall 300d.

With this configuration of the present disclosure, the thermal safety of the battery pack may be improved. The heat-resistant member 310d may be stably coupled to the partition wall 300d, thereby suppressing or blocking thermal propagation between the battery assemblies 200 when a thermal event occurs.

Additionally, the battery pack according to the present disclosure may further include various components, for example, components of a battery pack known at the time of filing of the present disclosure, such as a BMS, a busbar, a relay, a current sensor, and the like.

A vehicle according to the present disclosure may include a battery pack according to the present disclosure described above. The battery pack according to the present disclosure may be applied to vehicles such as electric vehicles or hybrid vehicles. Additionally, the vehicle according to the present disclosure may further include various other components included in the vehicle, for example, a body, a motor, a control device such as an electronic control unit (ECU), and the like, in addition to this battery pack.

Meanwhile, the terms indicating directions as used herein such as upper, lower, left, right, front, and back are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious that a variety of modifications and variations may be made thereto by those having ordinary skill in the technical field pertaining to the present disclosure within the technical aspect of the present disclosure and the scope of the appended claims and their equivalents.

## Claims

1. A battery pack comprising:
a base plate;
a battery assembly comprising a case installed on an upper surface of the base plate and a plurality of battery cells positioned inside the case;
a partition wall installed on the upper surface of the base plate; and
a heat-resistant member provided on one surface of the partition wall.

2. The battery pack according to claim 1,
wherein the partition wall provides an internal space, and
the heat-resistant member is disposed in the internal space.

3. The battery pack according to claim 2,
wherein the partition wall comprises:
a first plate; and
a second plate spaced apart from the first plate and facing the first plate, and
the heat-resistant member is positioned between the first plate and the second plate.

4. The battery pack according to claim 3,
wherein the partition wall further comprises:
a first part connecting a lower portion of the first plate and a lower portion of the second plate.

5. The battery pack according to claim 4,
wherein the first part extends long along a lower edge of the first plate and covers a lower edge of the heat-resistant member.

6. The battery pack according to claim 3,
wherein the heat-resistant member is in contact with the upper surface of the base plate.

7. The battery pack according to claim 3,
wherein the partition wall further comprises:
a second part connecting an upper portion of the first plate and an upper portion of the second plate.

8. The battery pack according to claim 7,
wherein the second part extends long along an upper edge of the first plate and covers an upper edge of the heat-resistant member.

9. The battery pack according to claim 3,
wherein the heat-resistant member comprises:
a first heat-resistant member and a second heat-resistant member that are spaced apart from each other, and
the partition wall further comprises:
a third part positioned between the first heat-resistant member and the second heat-resistant member and connecting the first plate and the second plate.

10. The battery pack according to claim 1,
wherein the heat-resistant member is configured to have a thermal conductivity lower than the thermal conductivity of the partition wall.

11. The battery pack according to claim 1,
wherein the heat-resistant member comprises a silicon or aerogel material.

12. The battery pack according to claim 1,
wherein the heat-resistant member covers an outer surface of the partition wall.

13. The battery pack according to claim 12,
wherein the heat-resistant member covers the entire outer surface of the partition wall.

14. The battery pack according to claim 12, further comprising:
an adhesive member disposed between the heat-resistant member and the partition wall.

15. The battery pack according to claim 12,
wherein the heat-resistant member comprises a mica material.

16. A vehicle comprising a battery pack according to any one of claims 1 to 15.
